# FASCICULE DE BREVET EUROPEEN

(11) **EP 1 108 577 B1**
(45) Date de publication et mention de la délivrance du brevet: **25.04.2007**
(21) Numéro de dépôt: 00127123.8
(22) Date de dépôt: 12.12.2000
(51) Int. Cl.: B60H 1/32

(54) **Procede de controle de l'etat d'une boucle de climatisation comprenant un compresseur a debit variable**
Verfahren für die Steuerung einer Klimaanlage, die einen mengenregelbaren Verdichter enthält
Procedure for controlling an air conditioning system comprising a variable capacity compressor

(30) Priorité: 17.12.1999 FR 9916008
(43) Date de publication de la demande: 20.06.2001
(73) Titulaire: VALEO SYSTEMES THERMIQUES, 78320 Le Mesnil Saint-Denis (FR)
(72) Inventeur: Liu, Jin Ming, 78700 Conflans S/Honorine (FR); Hamery, Bruno, 75005 Paris (FR)
(74) Mandataire: Gérard, Michel

(56) Documents cités:
- US-A- 4 102 150
- US-A- 4 667 480
- US-A- 4 909 043
- US-A- 5 099 654

## Description

L'invention concerne la climatisation de l'habitacle des véhicules automobiles.

On fait appel communément pour cette fonction à une boucle de fluide réfrigérant comprenant un compresseur, un condenseur, un détendeur et un évaporateur, ce dernier étant en contact avec un flux d'air à refroidir.

À l'origine, le compresseur était entraîné en permanence par le moteur du véhicule de manière à produire un débit de fluide réfrigérant déterminé par la vitesse du moteur. Le flux d'air fortement refroidi par l'évaporateur traversait ensuite le radiateur de chauffage de l'habitacle pour être ajusté à la température voulue.

Le refroidissement de l'air, suivi d'un réchauffement, était peu satisfaisant en termes d'économie d'énergie. Pour y remédier, on a eu recours à des compresseurs à cylindrée variable, dits à commande interne, dont le débit pouvait être réglé, indépendamment de leur vitesse de rotation dans la plage de régulation de la cylindrée, grâce à une vanne dont la position était telle que la pression d'entrée du fluide était fonction de la pression de sortie. Les réglages obtenus n'étant pas encore suffisamment fins, on a mis au point des compresseurs à cylindrée variable à commande externe. Ces compresseurs possèdent une électrovanne, de préférence hacheuse, dont le courant d'alimentation détermine la pression d'entrée du fluide dans le compresseur. Cette pression étant égale, à une perte de charge près, à celle régnant dans l'évaporateur, laquelle détermine la température de fonctionnement de l'évaporateur, on peut ainsi régler avec précision l'efficacité de la boucle de climatisation. Un exemple de compresseur à cylindrée variable à commande externe est décrit dans EP-A-0 353 764, ainsi que dans US 4 909 043 A, qui est considéré comme l'état de l'art le plus proche.

En cas de fuite dans la boucle, la quantité de fluide réfrigérant qu'elle contient va diminuer. En-deçà d'un seuil de charge de fluide réfrigérant, le compresseur en fonctionnement risque d'être détérioré.

Par ailleurs, il peut arriver que la vanne de commande du compresseur se bloque et ne permette plus de régler la puissance frigorifique produite, quel que soit le courant d'alimentation qui lui est appliqué.

Le but de l'invention est de permettre la détection d'anomalies de fonctionnement d'une boucle de climatisation comprenant un compresseur à débit variable, et notamment une charge insuffisante de fluide réfrigérant ou un blocage de la vanne de commande du compresseur.

L'invention vise en particulier un procédé pour contrôler l'état d'une boucle de climatisation de l'habitacle d'un véhicule automobile comprenant notamment un évaporateur propre à refroidir un flux d'air à envoyer dans l'habitacle, et un compresseur à débit variable commandé par un signal électrique de commande, procédé dans lequel on détermine au moyen d'un capteur la température dudit flux d'air, on définit, pour au moins une valeur dudit signal de commande, une valeur théorique correspondante de ladite température, on compare la valeur réelle de celle-ci à la valeur théorique et on utilise le résultat de cette comparaison en tant qu'indicateur de l'état normal ou anormal de la boucle.

Le résultat de la comparaison peut notamment indiquer une sous-charge de fluide réfrigérant dans la boucle.

En effet, en fonctionnement normal, la majeure partie du volume de l'évaporateur est remplie de fluide réfrigérant en équilibre liquide/gaz, dont la température est déterminée par la pression à l'entrée du compresseur, comme indiqué plus haut. Si la quantité de fluide réfrigérant dans la boucle est insuffisante, l'évaporateur ne contient plus qu'une petite quantité, ou même plus du tout, de fluide à l'état liquide, et est au contraire rempli entièrement ou presque de fluide à l'état gazeux surchauffé, c'est-à-dire à une température supérieure à la température d'équilibre liquide/gaz. Un capteur de la température du flux d'air en contact avec l'évaporateur, ou en contact avec l'air immédiatement en aval de celui-ci, placé en regard d'une zone de l'évaporateur où le fluide est normalement en équilibre liquide/gaz, sera alors en regard d'une zone de surchauffe et détectera une température supérieure à la température théorique.

Dans le cas d'un compresseur à cylindrée variable à commande externe tel qu'évoqué plus haut, un blocage de la vanne du compresseur peut également être mis en évidence par le résultat de la comparaison.

Le choix du courant d'alimentation de la vanne reste alors sans effet sur la pression à l'entrée du compresseur et par conséquent sur la température du flux d'air, celle-ci pouvant être aussi bien supérieure qu'inférieure à la valeur théorique.

Des caractéristiques optionnelles de l'invention, complémentaires ou alternatives, sont énoncées ci-après:
- Une sous-charge éventuelle de fluide réfrigérant est indiquée par le fait que la température réelle du flux d'air dépasse un seuil prédéterminé par rapport à la température théorique.
- Pour contrôler la charge de fluide réfrigérant, on effectue ladite comparaison après avoir appliqué pendant une durée suffisante un courant de commande propre à produire un débit élevé dudit fluide.
- Un blocage éventuel de la vanne du compresseur est indiqué par le fait que la température réelle du flux d'air reste constante lorsqu'on fait varier ledit courant de commande et par conséquent la température théorique.
- Le compresseur est entraîné électriquement.
- Ladite valeur théorique ou ledit seuil est défini en utilisant, en combinaison avec ledit signal de commande, des paramètres qui relient la température du flux d'air à ladite pression à l'entrée du compresseur.
- Lesdits paramètres comprennent l'un au moins des paramètres suivants: état d'un pulseur produisant ledit flux d'air, position d'un volet de recyclage de l'air de l'habitacle, vitesse du véhicule, températures de l'air à l'extérieur et à l'intérieur de l'habitacle, degré hygrométrique et température du flux d'air incident, débit du fluide réfrigérant dans la boucle.

Le capteur peut être placé au voisinage, soit de la zone de surchauffe, soit du point le plus froid de l'évaporateur, soit encore d'un point de l'évaporateur porté à une température intermédiaire.

Les caractéristiques et avantages de l'invention seront exposés plus en détail dans la description ci-après, en se référant aux dessins annexés.
La figure 1 est une vue schématique de côté d'un évaporateur d'une boucle de climatisation de véhicule, muni d'une sonde de température d'air en vue de la mise en oeuvre du procédé selon l'invention.
La figure 2 est une vue schématique d'arrière de l'évaporateur.
La figure 3 est un graphique montrant la variation de la température du flux d'air en fonction du courant d'alimentation de la vanne de commande du compresseur.

L'évaporateur illustré, désigné par la référence 1, présente une face avant ou face d'entrée 2 et une face arrière ou face de sortie 3, et est traversé, de la face 2 à la face 3, par un flux d'air à refroidir représenté par la flèche F. Une sonde de température 4 est encastrée dans l'évaporateur ou en aval de celui-ci, au voisinage de sa face arrière 3, de manière à mesurer la température de l'air refroidi par l'évaporateur.

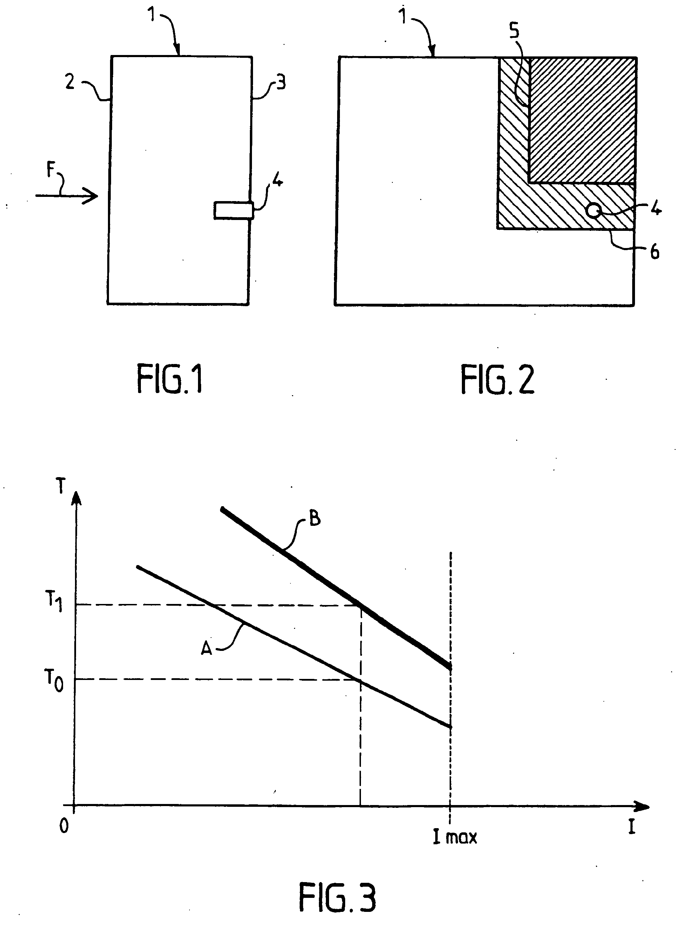

La figure 2 montre l'évaporateur vu par sa face arrière. On a représenté schématiquement sous forme d'un rectangle une zone 5 de l'évaporateur, proche de la tubulure de sortie non représentée du fluide réfrigérant, dans laquelle ce dernier est surchauffé, après vaporisation, lorsque la boucle de climatisation fonctionne normalement. La sonde 4 est située hors de cette zone et à faible distance de celle-ci. Elle est donc balayée par de l'air qui a traversé la zone restante de l'évaporateur, où le fluide réfrigérant est en équilibre liquide/gaz. Cet air est à une température théorique liée à la pression du fluide à l'entrée du compresseur et par conséquent au courant d'alimentation de la vanne de commande de celui-ci, comme exposé plus haut.

En cas de déficit de fluide réfrigérant, le fluide surchauffé occupe une zone 6 de l'évaporateur plus grande que la zone 5 et englobant la sonde 4. La température mesurée par celle-ci est donc supérieure à la température théorique définie par le courant de commande du compresseur.

La figure 3 montre en A une courbe typique représentative de la variation de la température théorique T₀ du flux d'air ayant traversé l'évaporateur, en fonction du courant I d'alimentation de la vanne de commande du compresseur, laquelle peut varier entre 0 et une valeur maximale Imax. La figure 3 montre également une courbe B qui associe à chaque valeur de I une valeur de température T₁ supérieure à la valeur correspondante de la température théorique T₀. Une telle valeur T₁ peut être utilisée comme seuil de détection d'une charge insuffisante de fluide réfrigérant dans la boucle de climatisation.

En réalité, c'est la pression du fluide à l'entrée du compresseur qui est déterminée directement par le courant I, dans les limites de la cylindrée du compresseur. Quant à la température du flux d'air ayant traversé l'évaporateur, elle est fonction de la température d'évaporation dans l'évaporateur et de divers paramètres tels que le débit du flux d'air, son degré hygrométrique et sa température en amont de l'évaporateur, et l'efficacité de l'évaporateur. Le débit du flux d'air peut dépendre à son tour de l'état d'un pulseur qui le produit, de la position d'un volet de recyclage de l'air de l'habitacle et de la vitesse du véhicule. Enfin, comme indiqué plus haut, la relation entre la température d'évaporation dans l'évaporateur et la pression du fluide réfrigérant à l'entrée du compresseur dépend du débit du fluide réfrigérant dans la boucle. Tous ces paramètres, qui sont choisis dans le cadre de la conduite de l'installation de climatisation, ou qui sont déterminables, directement ou indirectement, par des moyens existants, peuvent être pris en compte pour le calcul de la température théorique T₀, la courbe A de la figure 3 dépendant de la valeur instantanée de ces paramètres. En variante, on peut utiliser une courbe A fixe, et choisir la courbe B de telle sorte que la température T₁ soit toujours significativement supérieure à la température théorique, corrigée par l'application des paramètres, quelles que soient les valeurs de ceux-ci.

Le contrôle de la charge de fluide réfrigérant est effectué lors du fonctionnement du véhicule et/ou lors des opérations de maintenance, en réalisant la comparaison de températures après une durée déterminée, par exemple comprise entre 2 et 3 minutes, de fonctionnement du compresseur à une cylindrée relativement élevée.

On notera qu'il est connu de disposer une sonde de température de l'air refroidi au voisinage du point le plus froid de l'évaporateur, qui est généralement proche de la tubulure d'entrée du fluide réfrigérant. Une telle sonde est utilisée pour la régulation de la température du flux d'air et/ou pour la détection d'un risque de givrage de l'évaporateur. En adaptant le niveau de détection du givrage de la sonde 4 décrite plus haut, on peut alors l'utiliser pour la détection du givrage. De même elle peut être utilisée pour la régulation de la température du flux d'air. La sonde connue peut être utilisée pour la mise en oeuvre de la présente invention, la détection de la sous-charge étant alors plus tardive puisqu'une température anormalement élevée n'est mesurée que lorsque l'évaporateur ne contient pratiquement plus de fluide à l'état liquide. La sonde utilisée dans l'invention peut également être disposée en toute position intermédiaire.

## Revendications

1. Procédé pour contrôler l'état d'une boucle de climatisation de l'habitacle d'un véhicule automobile comprenant un évaporateur (1) propre à refroidir un flux d'air à envoyer dans l'habitacle, un capteur (4) déterminant la température dudit flux d'air, et un compresseur à débit variable commandé par un signal électrique de commande, ledit procédé étant **caractérisé par** les étapes suivantes: on définit, pour au moins une valeur dudit signal de commande, une valeur théorique (T₀) correspondante de ladite température, on détermine au moyen dudit capteur (4) la valeur réelle de ladite température, on compare la valeur réelle de celle-ci à la valeur théorique et on utilise le résultat de cette comparaison en tant qu'indicateur de l'état normal ou anormal de la boucle.

2. Procédé selon la revendication 1, dans lequel on utilise le résultat de ladite comparaison en tant qu'indicateur d'une sous-charge éventuelle de fluide réfrigérant dans la boucle.

3. Procédé selon la revendication 2, dans lequel une sous-charge éventuelle de fluide réfrigérant est indiquée par le fait que la température réelle du flux d'air dépasse un seuil prédéterminé (T₁) par rapport à la température théorique.

4. Procédé selon l'une des revendications 2 et 3, dans lequel, pour contrôler la charge de fluide réfrigérant, on effectue ladite comparaison après avoir appliqué pendant une durée suffisante un signal de commande propre à produire un débit élevé dudit fluide.

5. Procédé selon l'une des revendications précédentes, dans lequel le compresseur est du type à cylindrée variable à commande externe, ledit signal de commande étant un courant de commande alimentant une vanne incorporée au compresseur et propre à établir à l'entrée de celui-ci une pression qui est déterminée par ledit courant de commande.

6. Procédé selon la revendication 5, dans lequel on utilise le résultat de ladite comparaison en tant qu'indicateur d'un blocage éventuel de la vanne du compresseur.

7. Procédé selon la revendication 6, dans lequel un blocage éventuel de la vanne du compresseur est indiqué par le fait que la température réelle du flux d'air reste constante lorsqu'on fait varier ledit courant de commande et par conséquent la température théorique.

8. Procédé selon l'une des revendications 1 à 4, dans lequel le compresseur est entraîné électriquement.

9. Procédé selon l'une des revendications précédentes, dans lequel ladite valeur théorique ou ledit seuil est défini en utilisant, en combinaison avec ledit signal de commande, des paramètres qui relient la température du flux d'air à ladite pression à l'entrée du compresseur.

10. Procédé selon la revendication 9, dans lequel lesdits paramètres comprennent l'un au moins des paramètres suivants: état d'un pulseur produisant ledit flux d'air, position d'un volet de recyclage de l'air de l'habitacle, vitesse du véhicule, températures de l'air à l'extérieur et à l'intérieur de l'habitacle, degré hygrométrique et température du flux d'air incident, débit du fluide réfrigérant dans la boucle.

11. Procédé selon l'une des revendications précédentes, dans lequel ledit capteur (4) est placé au voisinage de la zone de surchauffe de l'évaporateur.

12. Procédé selon l'une des revendications 1 à 10, dans lequel ledit capteur est placé au voisinage du point le plus froid de l'évaporateur.

13. Procédé selon l'une des revendications 1 à 10, dans lequel ledit capteur est placé au voisinage d'un point de l'évaporateur porté à une température intermédiaire.

## Claims

1. Method to monitor the status of a motor vehicle interior air conditioning circuit comprising an evaporator (1) suitable for cooling an air flow to be sent into the car interior, a sensor (4) for determining the temperature of said air flow, and a variable flow compressor controlled by an electrical control signal, said method being **characterised by** the following steps: a theoretical value (T₀) corresponding to said temperature is defined for at least one value of said control signal, the actual value of said temperature is determined by means of said sensor (4), the actual value thereof is compared to the theoretical value and the result of this comparison is used as an indicator of the normal or abnormal status of the circuit.

2. Method according to claim 1, wherein the result of said comparison is used as an indicator of a possible underload of refrigerant fluid in the circuit.

3. Method according to claim 2, wherein a possible underload of refrigerant fluid is indicated by the fact that the actual air flow temperature exceeds a predetermined threshold (T₁) with respect to the theoretical temperature.

4. Method according to any of claims 2 and 3, wherein, to monitor the refrigerant fluid load, said comparison is performed after applying for a sufficient period a control signal suitable for producing a high flow of said fluid.

5. Method according to any of the above claims, wherein the compressor is of the external control variable capacity-type, said control signal being a control current powering a valve incorporated in the compressor and suitable for creating at the inlet thereof a pressure which is determined by said control current.

6. Method according to claim 5, wherein the result of said comparison is used as an indicator of a possible blockage of the compressor valve.

7. Method according to claim 6, wherein a possible blockage of the compressor valve is indicated by the fact that the actual air flow temperature remains constant when said control current and, as a result, the theoretical temperature are varied.

8. Method according to any of claims 1 to 4, wherein the compressor is driven electrically.

9. Method according to any of the above claims, wherein said theoretical value or said threshold is defined using, in combination with said control signal, parameters linking the air flow temperature with said pressure at the compressor inlet.

10. Method according to claim 9, wherein said parameters comprise at least one of the following parameters: status of a blower producing said air flow, position of a car interior air recycling flap, vehicle speed, air temperature outside and inside the car interior, relative humidity and temperature of incident air flow, refrigerant fluid flow in the circuit.

11. Method according to any of the above claims, wherein said sensor (4) is positioned in the vicinity of the evaporator overheating zone.

12. Method according to any of claims 1 to 10, wherein said sensor is positioned in the vicinity of the coldest point of the evaporator.

13. Method according to any of claims 1 to 10, wherein said sensor is positioned in the vicinity of a point of the evaporator heated to an intermediate temperature.

## Patentansprüche

1. Verfahren zum Kontrollieren der Beschaffenheit eines Klimaanlageschlosses des Fahrgastraums eines Kraftfahrzeugs umfassend einen Verdampfer (1) zum Abkühlen eines in den Fahrgastraum zu blasenden Luftstroms, einen die Temperatur des besagten Luftstroms feststellenden Fühler (4) und einen Verdichter mit variablem Durchsatz, gesteuert durch ein elektrisches Steuersignal, wobei das besagte Verfahren durch die folgenden Etappen **gekennzeichnet** wird: man definiert für zumindest einen Wert des besagten Steuersignals einen entsprechenden theoretischen Wert (T₀) der besagten Temperatur, man stellt mithilfe des besagten Fühlers (4) den tatsächlichen Wert der besagten Temperatur fest, man vergleicht den tatsächlichen Wert der Letzteren mit dem theoretischen Wert und man verwendet das Ergebnis dieses Vergleichs als Indikator der normalen oder anormalen Beschaffenheit des Schlosses.

2. Verfahren nach Anspruch 1, wobei man das Ergebnis des besagten Vergleichs als Indikator einer eventuellen Kältemittelunterbefüllung im Kreislauf verwendet.

3. Verfahren nach Anspruch 2, wobei eine eventuelle Kältemittelunterbefüllung durch die Tatsache angezeigt wird, dass die tatsächliche Temperatur des Luftstroms eine im Hinblick auf die theoretische Temperatur vorausbestimmte Schwelle (T₁) überschreitet.

4. Verfahren nach einem der Ansprüche 2 und 3, wobei zum Kontrollieren der Kältemittelbefüllung der besagte Vergleich durchgeführt wird, nachdem über eine ausreichende Dauer ein Steuersignal angewendet wurde, welches dazu bestimmt ist, einen hohen Durchsatz des besagten Mittels zu erzeugen.

5. Verfahren nach einem der vorhergehenden Ansprüche, wobei der Verdichter von der Art mit extern geregeltem und variablem Hubvolumen ist, wobei das besagte Steuersignal ein Steuerstrom ist, der ein Ventil versorgt, das im Verdichter eingebaut und dazu bestimmt ist, am Eintritt des Letzteren einen Druck zu erzeugen, der vom besagten Steuerstrom bestimmt wird.

6. Verfahren nach Anspruch 5, wobei man das Ergebnis des besagten Vergleichs als Indikator einer eventuellen Blockierung des Ventils des Verdichters verwendet.

7. Verfahren nach Anspruch 6, wobei eine eventuelle Blockierung des Ventils des Verdichters durch die Tatsache angezeigt wird, dass die tatsächliche Temperatur des Luftstroms konstant bleibt, wenn man den besagten Steuerstrom und folglich die theoretische Temperatur variieren lässt.

8. Verfahren nach einem der Ansprüche 1 bis 4, wobei der Verdichter elektrisch angetrieben wird.

9. Verfahren nach einem der vorhergehenden Ansprüche, wobei der besagte theoretische Wert oder die besagte Schwelle definiert werden, indem, in Kombination mit dem besagten Steuersignal, Parameter verwendet werden, welche die Temperatur des Luftstroms mit dem besagten Druck am Eintritt des Verdichters verbinden.

10. Verfahren nach Anspruch 9, wobei die besagten Parameter zumindest einen der folgenden Parameter beinhalten: Beschaffenheit eines den besagten Luftstrom erzeugenden Gebläses, Position einer Umluftklappe des Fahrgastraums, Fahrzeuggeschwindigkeit, Lufttemperaturen außerhalb und innerhalb des Fahrgastraums, Feuchtigkeitsgrad und Temperatur des anströmenden Luftstroms, Durchsatz des Kältemittels im Schloß.

11. Verfahren nach einem der vorhergehenden Ansprüche, wobei der besagte Fühler (4) in der Nähe des Überhitzungsbereichs des Verdampfers angeordnet ist.

12. Verfahren nach einem der Ansprüche 1 bis 10, wobei der besagte Fühler in der Nähe des kältesten Punktes des Verdampfers angeordnet ist.

13. Verfahren nach einem der Ansprüche 1 bis 10, wobei der besagte Fühler in der Nähe eines Punktes des Verdampfers angeordnet ist, der auf eine Zwischentemperatur gebracht wurde.
